# EUROPEAN PATENT APPLICATION

(11) **EP 4 604 414 A1**
(43) Date of publication of application: **20.08.2025**
(21) Application number: 24158472.1
(22) Date of filing: 19.02.2024
(51) Int. Cl.: H04B 7/06

(54) **USER EQUIPMENT PARTICIPATING IN A BEAM MANAGEMENT REPORTING PROCEDURE**

(71) Applicant: Panasonic Intellectual Property Corporation of America, Torrance, CA 90504 (US)
(72) Inventor: ZEINEDDINE, Khalid, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment comprising the following. Processing circuitry of the UE determines whether to initiate a beam management reporting procedure, based on results of measurements performed by the UE on one or more downlink reference signals. The processing circuitry, in case of determining to initiate the beam management reporting procedure, generates a UE-initiated beam management report comprising information for assisting beam management at a base station for the UE. The processing circuitry performs control to determine uplink radio resources for transmitting the generated UE-initiated beam management report. A transmitter of the UE transmits the generated UE-initiated beam management report to the base station using the determined uplink radio resources. The processing circuitry performs a retransmission mechanism for transmitting the generated UE-initiated beam management report.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved beam management reporting procedure.

In an embodiment, the techniques disclosed here feature a user equipment comprising the following. Processing circuitry of the UE determines whether to initiate a beam management reporting procedure, based on results of measurements performed by the UE on one or more downlink reference signals. The processing circuitry, in case of determining to initiate the beam management reporting procedure, generates a UE-initiated beam management report comprising information for assisting beam management at a base station for the UE. The processing circuitry performs control to determine uplink radio resources for transmitting the generated UE-initiated beam management report. A transmitter of the UE transmits the generated UE-initiated beam management report to the base station using the determined uplink radio resources. The processing circuitry performs a retransmission mechanism for transmitting the generated UE-initiated beam management report.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows exemplary functional split options in 5G O-RAN,
- **Fig. 3**: illustrates a simplified and exemplary implementation of a set of synchronization signal blocks distributed in a half-frame,
- **Fig. 4 and 5**: illustrate the contention-based and contention-free RACH procedure;
- **Fig. 6**: illustrates several beams and the corresponding SSB index, SSB1-SSB8, and how the beams are transmitted by the gNB in a beam-sweeping manner,
- **Fig. 7**: illustrates a signaling diagram for CSI measurement and reporting,
- **Fig. 8**: illustrates an exemplary and simplified structure of a communication device, such as UE, and a base station,
- **Fig. 9**: illustrates a structure of the communication device, such as the UE, according to an exemplary implementation of the improved beam management reporting procedure,
- **Fig. 10**: illustrates a flow diagram for the UE behavior according to an exemplary implementation of the improved beam management reporting procedure,
- **Fig. 11**: is a signaling diagram illustrating an exemplary exchange between the UE and the gNB for an exemplary implementation of the improved beam management reporting procedure.

### DETAILED DESCRIPTION

### 5G NR system architecture and protocol stacks

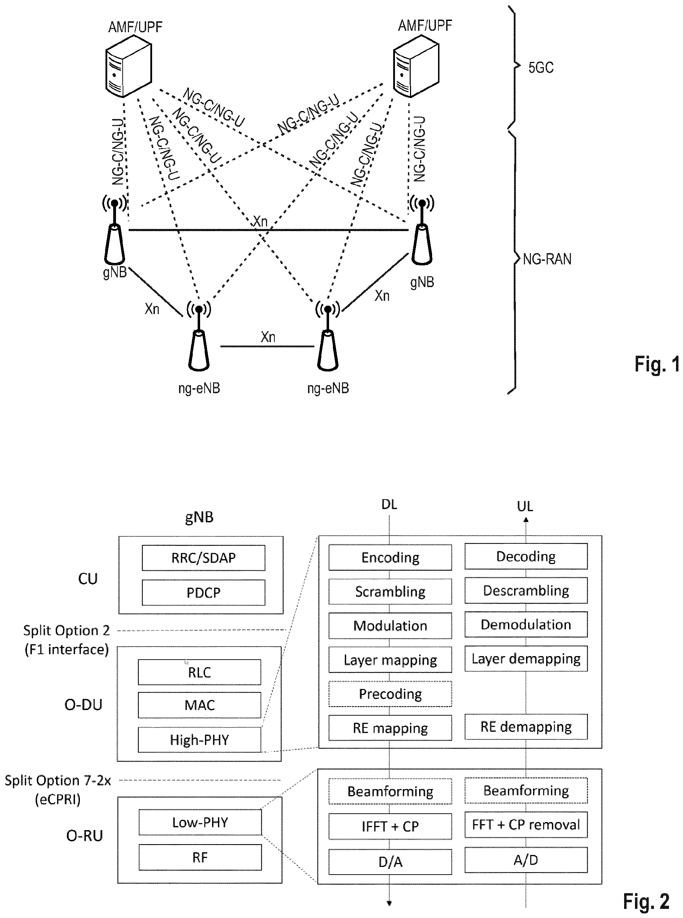

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.0.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also 3GPP TS 38.211 v18.1.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

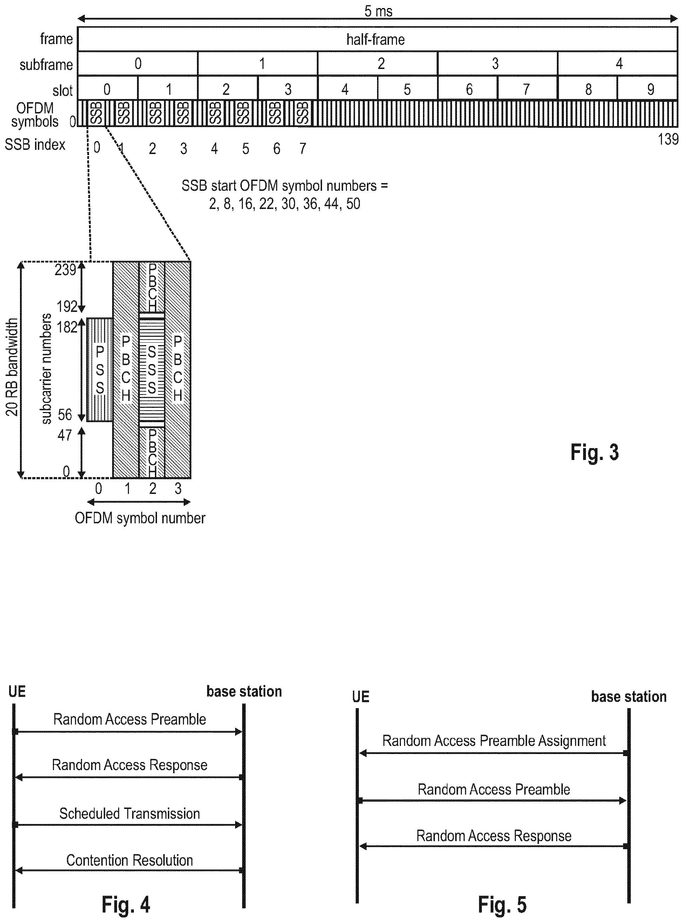

A simplified and exemplary illustration of the SSB according to the above definitions is illustrated in **Fig. 3****,** which shows at the bottom part the PSS, SSS, and PBCH in the time and frequency domain.

The SSB set illustrated in Fig. 3 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

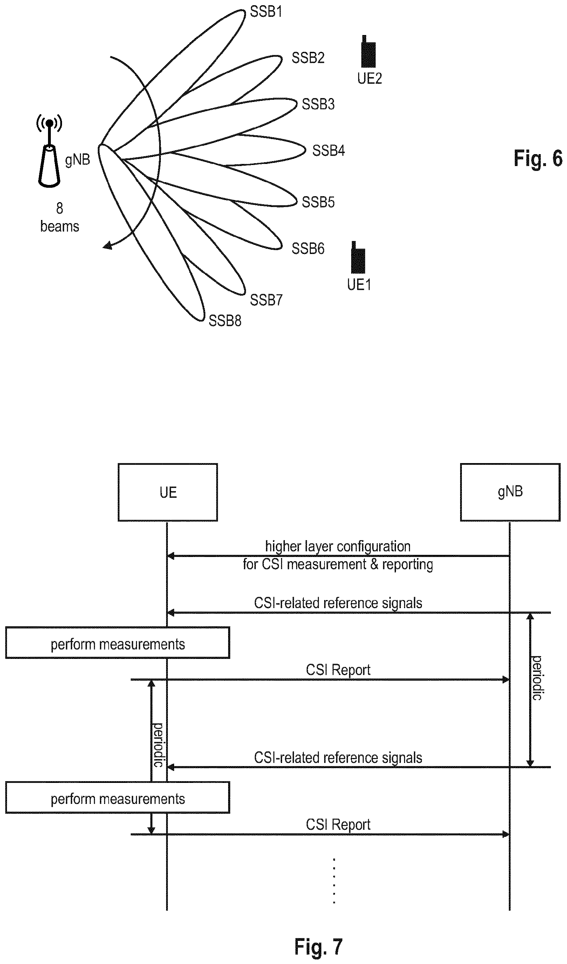

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 6****.** Similar to the exemplary assumption of Fig. 3, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Reference Signals

Several different types of reference signals (RS) are used for 5G NR (see 3GPP TS 38.211 v18.1.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see 3GPP TS 38.214 v18.1.0 e.g. section 8.4.1)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. 3GPP TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

### Uplink Control Information in 5G NR and Scheduling Requests

Whereas Downlink Control Information is carried by the PDCCH, Uplink Control Information (UCI) can be transmitted on the PUCCH or the PUSCH depending on the situation. Uplink control information can be e.g.
- the channel state information (CSI), related to the downlink channel conditions, used to assist downlink scheduling, including multi-antenna and beamforming schemes,
- the ACK/NACK information (Hybrid-ARQ acknowledgments for received DL-SCH transport blocks), and
- scheduling requests, indicating that a device needs uplink resources for UL-SCH transmission.

Not all of these need be carried by a single transmission. For instance, the CSI may be carried alone, or the ACK/NACK may be carried alone, or the SR may be carried alone, or the CSI and ACK/NACK are transmitted together in a PUCCH/PUSCH, etc.

The physical uplink control channel (PUCCH) is the basis for transmission of uplink control. However, NR supports UCI on PUSCH as the basic way of handling simultaneous transmission of data and control. If the device is transmitting on the PUSCH, the UCI is multiplexed with data on the granted resources instead of being transmitted on the PUCCH.

A short duration PUCCH can be transmitted in the last one or two symbols of a slot and thus supports very fast feedback of hybrid-ARQ acknowledgments in order to realize so-called self-contained slots where the delay from the end of the data transmission to the reception of the acknowledgment from the device is in the order of an OFDM symbol, corresponding to a few tens of microseconds depending on the numerology used. This can be compared to almost 3 ms in LTE and is yet another example on how the focus on low latency has impacted the NR design. For situations when the duration of the short PUCCH is too short to provide sufficient coverage, there are also possibilities for longer PUCCH durations.

There are a plurality of different PUCCH formats that can be used for transmitting the UCI, depending on the amount of information and the duration of the PUCCH transmission.

There are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used (see e.g. 3GPP TS 38.211 e.g. v18.1.0, section 6.3.2).

The UCI can be transmitted on the PUCCH flexibly in the time and frequency domain using specifically assigned radio resources, e.g. PUCCH resource sets. A UE can be configured e.g. with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH-Config information element (see e.g. 3GPP TS 38.331 e.g. v18.0.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1. One example configuration according to 3GPP is provided as follows as part of the PUCCH-Config IE (see e.g. 3GPP TS 38.331 v18.0.0)

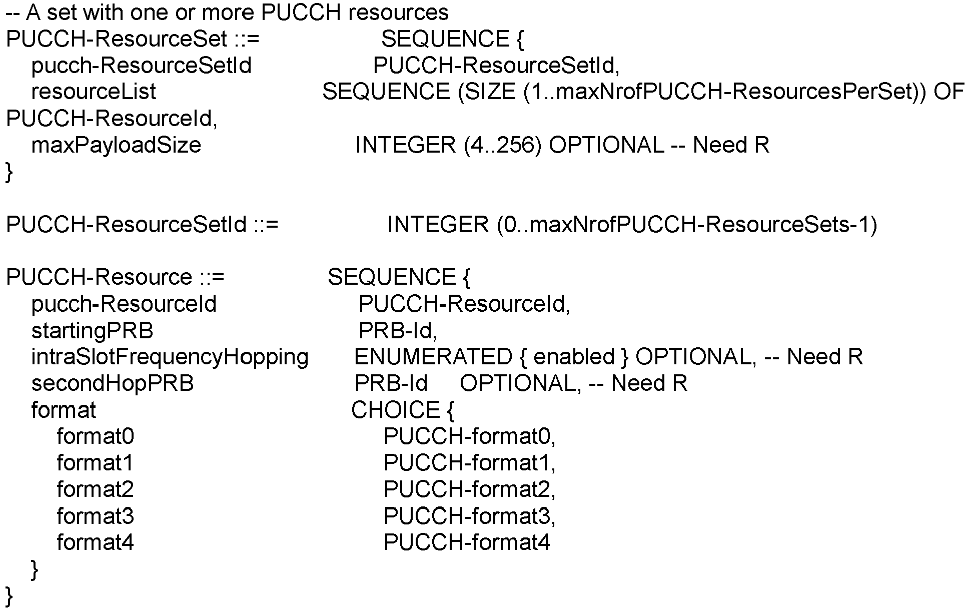

The current reporting of the UCI in the PUCCH is defined in 3GPP TS 38.213 e.g. v18.1.0, section 9.2.

A PUCCH resource may include one or more of the following parameters.
- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the *SchedulingRequestConfig* information element (which is configured inside the *MAC-CellGroupConfig* IE) and the *SchedulingRequestResourceConfig* information element (see e.g. 3GPP TS 38.331 v16.7.0, such as section 6.3.2). The *MAC-CellGroupConfig* IE configures the set of scheduling requests, used by the UE (ID, prohibit timer, etc.) and tied by the ID number to the SchedulingRequestResourceConfig which determines the PUCCH resources used alongside the periodicity among other parameters. Finally, in the *LogicalChannelConfig* IE, the logical channel is tied to a scheduling request ID (for details of the above lEs, see 3GPP TS 38.331 v18.0.0).

In brief, the scheduling request is basically a flag (1-bit) used by the user equipment to request uplink resources from the uplink scheduler at the base station. Since the device requesting the resources, by definition, has no PUSCH resource available, the scheduling request is transmitted on the PUCCH using the preconfigured and periodically reoccurring PUCCH resources dedicated to the UE. The serving base station can then assign radio resources to the user equipment.

Each SR configuration consists of a set of periodically reoccurring PUCCH resources across different BWPs and cells (i.e. each SR configuration consists of a set of PUCCH resources tied to a numerology, BWP, and cell). With a dedicated scheduling-request mechanism, there is no need to provide the identity of the device requesting to be scheduled because the identity is implicitly known from the resources upon which the request is transmitted.

Each SR also corresponds to one or more logical channels which means that UE is able to make the query for UL resources for a selected logical channel. For a logical channel at most one PUCCH resource per BWP is configured. This provides the gNB not only with information that there are data awaiting transmission in the device, but also what type of data are awaiting transmission. This is useful information for the gNB given the wider range of traffic types the NR is designed to handle. For example, the gNB may want to schedule a device for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, that is, in the case of multiple logical channels having data to transmit a reasonable behavior is to trigger the scheduling request corresponding to the highest-priority logical channel.

UE may send up to a maximum number of SR requests and the maximum value is configured by network. A scheduling request is repeated in subsequent resources, up to a configurable limit, until a grant is received from the gNB. It is also possible to configure a prohibit timer, controlling how often a scheduling request can be transmitted which prevents UE from sending multiple SRs consecutively. An SR cannot be sent during a measurement gap or when UL-SCH is scheduled.

Finally, when the UE is in RRC_CONNECTED state and UL data arrives, but the UE is not configured with PUCCH resource for scheduling requests, the UE uses the CBRA, contention based random access, procedure based on the SS/PBCH blocks. Moreover, when the UE sends a scheduling request in response to UL data arrival but fails to receive an UL grant from the network, the UE uses the CBRA procedure based on the SS/PBCH blocks. This is because an SR is considered as pending until resources are granted by the gNB and is repeated on the PUCCH as long as it is pending. When the number of SRs sent on the PUCCH reaches a maximum configured by the higher layer, SR failure is declared, and a random access procedure is triggered.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, section 9.2.6), including the following. The random access procedure is triggered by a number of events:
- Initial access from RRC_IDLE; the UE uses the CBRA procedure based on the SS/PBCH blocks.
- RRC Connection Re-establishment procedure; the UE uses the CBRA procedure based on the SS/PBCH blocks.
- Handover; this uses the contention based or CFRA procedures, and it can be based on SS/PBCH blocks or CSI-RS.
- DL or UL data arrival during RRC_CONNECTED when UL synchronisation status is "non-synchronised";
   ∘ In case of UL data arrival with non-synchronized UL, the UE uses the CBRA procedure based on the SS/PBCH blocks.
   ∘ In case of UL data arrival with non-In case of DL data arrival with non-synchronized UL, the network uses a PDCCH order with contention based or CFRA procedure based on the SS/PBCH blocks.
- UL data arrival during RRC_CONNECTED when there are no PUCCH resources for SR available; the UE uses the CBRA procedure based on the SS/PBCH blocks.
- SR failure; the UE sends a scheduling request in response to UL data arrival but fails to receive an UL grant from the network. The UE uses the CBRA procedure based on the SS/PBCH blocks.
- Transition from RRC_INACTIVE to RRC_CONNECTED state; the UE uses the CBRA procedure based on the SS/PBCH blocks.
- To establish time alignment for a secondary TAG; the network uses a PDCCH order with CBRA procedure based on the SS/PBCH blocks.
- Request for Other SI (see clause 7.3); if the SI is contained in Msg1, the UE uses a dedicated preamble based on association with SS/PBCH block. If the SI is contained in Msg3, the UE uses the CBRA procedure based on the SS/PBCH blocks.
- Beam failure recovery; the UE uses the contention based or CFRA procedure based on SS/PBCH blocks or CSI-RS association.

A mobile terminal can be scheduled for uplink transmission if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

The PRACH consists of a preamble format made up of one or more preamble sequences transmitted in a time-frequency resource. The UE transmits the PRACH preamble in a PRACH occasion (RO) which is a time-frequency resource that the network allocates for preamble transmission. Each RO can be configured with 64 preambles. The higher layer parameter prach-Configuration Index determines the PRACH preamble format and the time domain resources of PRACH occasions, by pointing to a row in the random access configuration tables of 3GPP TS 38.211 (Tables 6.3.3.2-2/3/4).

There can be at least two types of random access procedures, contention based random access (CBRA) procedure, and contention free random access (CFRA) procedure. In the CBRA procedure, multiple users randomly select a preamble from a pool of preambles, and a contention resolution phase determines which user, if any, had its data successfully received by the network. Contention resolution resolves contention between two or more users selecting the same preamble. In the CFRA procedure, a preamble is uniquely pre-allocated to the user, hence there is no possibility of preamble collision between users and no need for contention resolution. An exemplary definition of a random access procedure can be found in 3GPP TS 38.321, v18.0.0 section 5.1.

The RACH procedure will be described in the following in more detail, with reference to **Fig. 4 and Fig. 5****.** In the following, the contention-based random access procedure is being described in more detail with respect to **Fig. 4****.** This procedure consists of four "steps" and thus can be termed for example as a 4-step RACH procedure.

First, the user equipment transmits a random access preamble on the Physical Random Access Channel (PRACH) to the base station (i.e. message 1 of the RACH procedure). When the UE transmits the preamble to the gNB, it conveys the selected SS/PBCH block index to the gNB. The network configures the association between the SS/PBCH Block indices and the PRACH occasions and preamble indices by broadcast signaling.

In the second step, the gNB acknowledges the reception of the preamble by sending a random access response (RAR) on a PDSCH channel. The RAR is scheduled by a Downlink Control Information (DCI) with a CRC scrambled by the Random Access Radio Network Temporary Identifier (RA-RNTI) on the corresponding PDCCH. The PDCCH of the RAR is transmitted in Type1-PDCCH Common Search Space (CSS). The RA-RNTI is a function of the time and frequency of the PRACH occasion the preamble is detected (see 38.321).

The UE attempts to receive the RAR during the RAR window. The RAR window starts at the first symbol of the earliest CORESET (control resource set) of Type1-PDCCH CSS that starts at least one symbol after the PRACH occasion corresponding to the PRACH transmission. The RAR window size is configured in number of slots and is less than 10 ms. In case of CBRA, the DMRS port of the PDSCH channel carrying the RAR and the DMRS port of the corresponding PDCCH channel are quasi-co-located with the reference signal used for association and transmission of the corresponding preamble.

At the start of the random access procedure, the UE sets the PREAMBLE_TRANSMISSION_COUNTER to 1. If the UE doesn't receive the RAR during the RAR window with a RAPID (random access preamble identity) that matches the transmitted preamble, it increments the PREAMBLE_TRANSMISSION_COUNTER by 1 and retransmits the PRACH preamble after a back off period. After several PRACH preamble retransmissions attempts, when the PREAMBLE_TRANSMISSION_COUNTER exceeds higher layer parameter *preambleTransMax,* without receiving a RAR with a RAPID that matches the transmitted preamble, the Random Access Channel (RACH) procedure fails.

When the UE successfully decodes a RAR with a RAPID that matches the transmitted preamble and that includes a MAC RAR, the UE performs the following:
- It processes the received TA command.
- It processes the UL grant in the MAC RAR, and in response transmits a PUSCH (a.k.a. Msg3).

In the third step of the CBRA procedure, the UE transmits Msg3 on the Uplink Shared Channel (UL-SCH) on a PUSCH in response to the uplink grant of the RAR. Msg3 contains C-RNTI MAC CE if the UE triggering the CBRA procedure is in CONNECTED Mode with a C-RNTI, or it contains the CCCH SDU with the Contention Resolution Identity MAC CE. The trigger of the random access procedure, determines the content of Msg3. For example:
- During initial access, Msg3 contains RRCSetupRequest.
- During Radio Resource Control (RRC) re-establishment, Msg3 contains RRCReestablishmentRequest.
- To transition from the RRC_INACTIVE state to the RRC_CONNECTED state, Msg3 contains RRCResumeRequest or RRCResumeRequest1.
- To get system information, Msg3 contains RRCSystemlnfoRequest.
- During contention-based BFR Msg3 contains C-RNTI MAC CE.

After the UE transmits Msg3 it starts the ra-ContentionResolutionTimer and monitors the PDCCH channel. The UE can receive a PDCCH with a CRC scrambled by the TC-RNTI requesting a retransmission of Msg3, if the gNB didn't successful decode Msg3. When the UE retransmits Msg3, it restarts the ra-ContentionResolutionTimer after the Msg3 retransmission.

In the fourth step of the CBRA procedure, the gNB transmits a message to the UE.
- If Msg3 contained the C-RNTI MAC CE, the gNB transmits a PDCCH with CRC scrambled by the C-RNTI. Upon reception of this PDCCH, the UE stops ra-ContentionResolutionTimer and considers the CBRA procedure successful.
- If Msg3 contained the CCCH SDU, the gNB transmits a PDCCH scheduling a PDSCH with CRC scrambled by the TC-RNTI, indicated to the UE in the RAR. The corresponding PDSCH echoes back the contention resolution identity received in Msg3. Upon reception of the PDCCH scheduling a PDSCH and with CRC scrambled by the TC-RNTI, the UE decodes the corresponding PDSCH. If the contention resolution identity received in the PDSCH matches that transmitted in Msg3, the UE stops ra-ContentionResolutionTimer and considers the CBRA procedure successful and sends uplink Hybrid Automatic Repeat Request (HARQ) acknowledgement to the gNB to stop any further retransmissions of this message.
   ∘ Else when the contention resolution identity received in the PDSCH doesn't match that transmitted in Msg3, the UE stops ra-ContentionResolutionTimer and considers the Contention Resolution unsuccessful.

If the ra-ContentionResolutionTimer expires before the UE successfully receives the downlink message transmitted by the gNB, the UE considers Contention Resolution unsuccessful. If Contention Resolution is unsuccessful, the UE increments the PREAMBLE_TRANSMISSION_COUNTER by 1 and restarts the random access procedure, with preamble selection, after a back off period. After several PRACH preamble retransmissions attempts, when the PREAMBLE_TRANSMISSION_COUNTER exceeds higher layer parameter preambleTransMax, without successful completing the random access procedure, the RACH procedure fails.

**Fig. 5** is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

In more detail, the UE-dedicated preamble assignment determines:
- The preamble index.
- The mask index to determine the PRACH Occasion(s) to use for preamble transmission within the set of PRACH occasions associated with the SS/PBCH Block or the channel-state information reference signals (CSI-RS) used for preamble transmission. The UE transmits on a preassigned preamble index and PRACH occasion(s) associated with a reference signal (SS/PBCH block or CSI-RS) that exceeds a higher layer configured threshold rsrp-ThresholdSSB or rsrp-ThresholdCSI-RS.

As the preamble is preassigned by the network, there is no contention resolution phase. As the preamble is dedicated, it also identifies the UE to gNB. The random access procedure is considered successful after reception of a RAR with a RAPID that matches the transmitted preamble.

The network configures dedicated PRACH preambles through *rach-ConfigDedicated.* Dedicated PRACH preambles are also known as contention free preambles or non-contention preambles. The dedicated RACH configuration can be used for reconfiguration with sync procedures such as handover. The network can configure dedicated preambles that are associated with either SS/PBCH blocks or with CSI-RS resources. The UE identifies the SSB index/CSI-RS resources index of candidate beams, and finds the corresponding PRACH occasion and preamble index within each PRACH occasion to use.

### rach-ConfigDedicated includes:

- The PRACH occasions to use for dedicated preambles,
- The dedicated (i.e. contention free) PRACH resources. This is a list of preamble resources associated with either SS/PBCH blocks or CSI-RS resources.
- Parameters to apply for prioritized CFRA procedures.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Both CBRA and CFRA procedures are possible in 2-step RA type too.

Another difference in terms of RRC is the big number of RRC configurations needed for 2-step RACH, in particular the PUSCH physical resources used to transmit MsgA (see below).

PRACH preamble and PUSCH in MsgA are transmitted in TDM (time division multiplex) fashion. The transmission of PUSCH is after the PRACH transmission by at least N symbols, where the value of N depends upon SCS (subcarrier spacing) of the active UL BWP.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

In more detail, in 2-step RA type, PUSCH is transmitted without waiting for a response from the network, hence the UE needs to know PUSCH configuration beforehand. The configuration for PUSCH is given in the IE msgA-PUSCH-Config:
- This IE is used to specify the PUSCH allocation for MsgA in 2-step RA type. It provides the UE with all needed configuration for PUSCH transmission such as time/frequency domain resource, DMRS type, MCS, PUSCH Tx power related parameters etc.
- This IE is configured separately for CFRA and CBRA, where for CBRA, the IE msgA-PUSCH-Config is configured as part of BWP-UplinkCommon IE. For CFRA, the IE msgA-PUSCH-Config is configured as part of the IE CFRA-TwoStep (discussed later) within RACH-ConfigDedicated.

Furthermore, when doing a message-A PUSCH transmission, there is not yet any closed-loop uplink timing control. Consequently, the message-A PUSCH transmissions may arrive with a relatively large timing misalignment relative to other uplink transmissions.

Generally, for RACH preambles, see for example, 3GPP TS 38.211 V18.1.0, "Table 6.3.3.2-2: Random access configurations for FR1 and paired spectrum/supplementary uplink" and section 6.3.3.2, "Mapping to physical resources".

The UE selects 2-step or 4-step RA type at the initiation of the RA procedure based on network configuration. For the CBRA case:
- When both 4-step and 2-step RA types are configured by the network, an RSRP threshold is used by the UE to select between 2-step RA type and 4-step RA type. The RSRP threshold is configured by the field msgA-RSRP-Threshold.
- If the RSRP is above this threshold, the UE select 2-step RA type otherwise, 4-step RA type is chosen.

For the CFRA case:
- When CFRA resources for 4-step RA type are configured, the UE performs random access with 4-step RA type.
- When CFRA resources for 2-step RA type are configured, UE performs random access with 2-step RA type.
- The network does not configure CFRA resources for both 4-step and 2-step RA types at the same time.

The advantages of a 2-step RACH compared to 4-step RACH are:
- Reducing the control signal overhead
- Reduce the latency.
- Allowing PUSCH transmission at the first step.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig*, with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks) (see Fig. 3). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said above main procedures may involve one or more of:
- *beam sweeping,* i.e., covering a spatial area with a set of beams transmitted and received according to pre-specified intervals and directions,
- *beam measurement,* i.e., the evaluation of the quality of the received (beam) signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the lEs *CSI-IM-Resource,* and *SSB-Index.*
2) List of *CSI-ResourceConfig* lEs
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetld, CSI-IM-ResourceSetld,* and/or *CSI-SSB-ResourceSetld)*
3) List of CSI-ReportConfig lEs.
   - Different *CSI-ReportConfig* in the list configure different CSI report instances. This is the Information Element which links the reporting configuration of this CSI-*ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information),
- PMI (Precoding Matrix Indicator),
- CRI (CSI-RS Resource Indicator),
- SSBRI (SS/PBCH Resource Block Indicator),
- LI (Layer Indicator),
- RI (Rank Indicator),
- L1-RSRP, and/or
- Capability Index.

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config)*
- CSI-related quantities (e.g. the rest from the IE *CSI-ReportConfig*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig*, *CSI-MeasConfig*, *CSI-ReportConfig*, *CSI-ResourceConfig*, *NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible and exemplary sequence of lEs for defining measurement and report according to the CSI framework is presented in the following:
- *CellGroupConfig* IE
   ∘ the *ServingCellConfig* IE of *SpCellConfig* or of *SCellConfig*
      - *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
      - *CSI-ReportConfig* IE

Fig. 7 illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field *"Transmission Configuration Indication".*
- Step 3: One out of the 8 activated TCI states is then actually used by the UE to receive a target channel/signal. For example, the UE receives a DCI signal, which indicates one of the codepoints in the DCI field *"Transmission Configuration Indication".* The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DL/UL operation) as follows:

### TCI-State information element

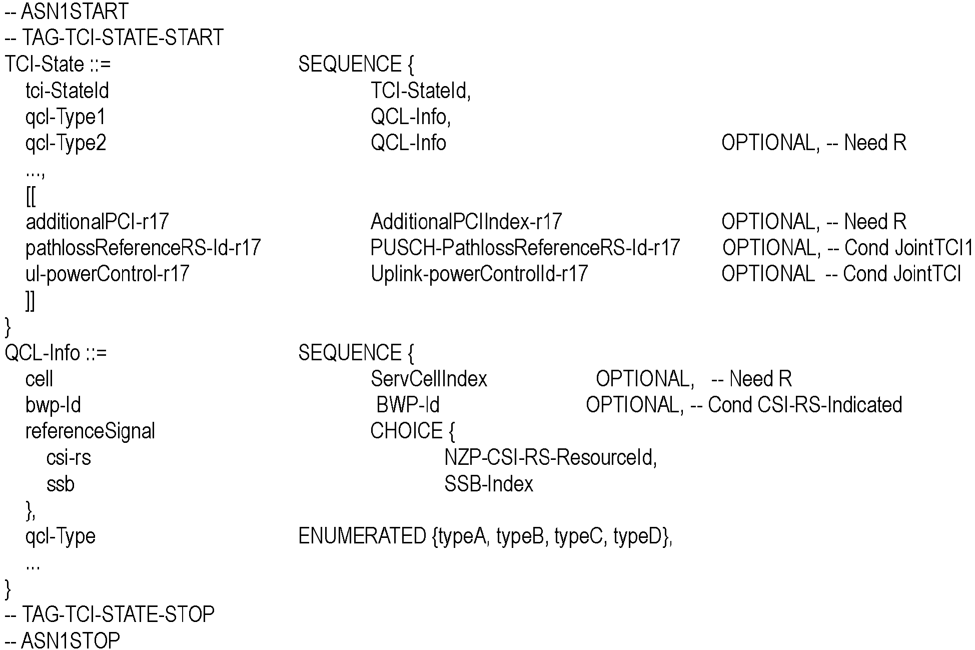

| ***QCL-Info* field descriptions** |
|---|
| ***bwp-Id*** |
| The DL BWP which the RS is located in. If the field is absent, the RS is located in the DL BWP in which the *TCI-State* is applied by the UE. |
| ***cell*** |
| The UE's serving cell in which the *reference Signal* is configured. If the field is absent, the *reference Signal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *reference Signal* is set to *csi-rs* and *unifiedTCI-State-Type* is configured, either both *cell* and *bwp-Id* are present or both *cell* and *bwp-Id* are absent. See TS 38.214 [19] clause 5.1.5. |
| ***referenceSignal*** |
| Reference signal with which quasi-collocation information is provided as specified in TS 38.214 [19] clause 5.1.5. |
| ***qcl-Type*** |
| QCL type as specified in TS 38.214 [19] clause 5.1.5. |

| ***TCI-State* field descriptions** |
|---|
| ***additionalPCI*** |
| Indicates the physical cell IDs (PCI) of the SSBs when *referenceSignal* is configured as SSB for both QCL-Type1 and QCL-Type2. In case the cell is present, the *additionalPCI* refers to a PCI value configured in the list configured using *additionalPCI-ToAddModList* in the serving cell indicated by the field cell. Otherwise, it refers to a PCI value configured in a list *additionalPCI-ToAddModList* configured in the serving cell where the *TCI-State* is applied by the UE. When this field is present the *cell* for *qcl-Type1* and *qcl-Type2* is configured with same value, if present. |
| ***pathlossReferenceRS-ld*** |
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| ***qcl-Type1, qcl-Type2*** |
| QCL information for the TCI state as specified in TS 38.214 [19] clause 5.1.5. |
| ***tci-Stateld*** |
| ID number of the TCI state. |
| ***ul-PowerControl*** |
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured. |

| **Conditional Presence** | **Explanation** |
|---|---|
| *CSI-RS-Indicated* | This field is mandatory present if *csi-rs* is included and *unifiedTCI-State Type* is not configured. This field is optionally present, Need R, if *csi-rs* is included and *unifiedTCI-State-Type* is configured. Otherwise, it is absent, Need R. |
| *JointTCI* | This field is optionally present, Need R, if this serving cell is configured with *unifiedTCI-State-Type* set to '*joint*'. It is absent, Need R, otherwise. |
| *JointTCI1* | This field is mandatory present, if this serving cell is configured with unifiedTCI-StateType set to 'joint'. It is absent, Need R, otherwise. |

For the uplink, the information element *TCI-UL-State* is defined in 3GPP TS 38.331, section 6.3.2. *3GPP Release 19 MIMO evolution* - *UE-initiated* / *event driven beam management*

As presented above, the network may configure periodic or semi-persistent beam reporting or trigger aperiodic beam reporting for the purpose of timely acquiring a best/preferred beam for data / control transmissions. This may result in large uplink reporting overhead and control signaling overhead in addition to reporting latency. Due to the network-configured nature of the beam reporting, the reporting latency caused by the periodic or semi-persistent beam reporting or triggered aperiodic beam reporting may also result in unnecessarily prolonged periods of communication between UE and network using beams that may have degraded unexpectedly. This might even result in beam failures, which then results in that the UE has to perform a beam failure detection and recovery procedure, rather than performing a simple beam switch in a timely manner. This is inefficient, and further, retransmissions of data might be required in addition to the incurred latency of the recovery procedure.

Given that the UE has better and more-timely knowledge of beam quality changes, beam reporting procedures that are initiated by the UE have the potential to lead to more timely beam reports together with reduced reporting overhead and preventing prolonged degraded communication quality.

Consequently, there is a need to specify enhancements to facilitate UE-initiated / event-driven beam management reporting procedures for reducing overhead and/or reporting latency. For such a UE-initiated beam reporting procedure, for the UE to know about the beam-quality change and about when to initiate beam reporting, the UE can perform measurements on DL reference signals. Based on these measurements, the UE can detect whether UE-initiated beam reporting is needed or not. For such a UE-initiated beam reporting procedure, the UE needs to find suitable UL channel resources to transmit the beam management report. This can depend on the report size, the tolerated delay, and the intended reliability of the transmission.

Furthermore, unlike other CSI reporting events and other uplink transmission of uplink control information, the transmission of the UE-initiated beam management report is important for the network because this is triggered at the UE most likely by a deterioration of the UL/DL transmission channels.

### Further Improvements

The inventors thus identified the possibility to define an improved beam management reporting procedure to avoid one or more of the above described disadvantages. The present invention relates to different solutions and variants for such an improved beam management reporting procedure, in one example an improved UE-initiated beam management reporting procedure.

Beam management procedures will play an important role in 6G communication systems, which are expected to operate in the higher frequency ranges (7-24 GHz, FR2 range, Terahertz range).

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression **"a set of one or more downlink reference signals"** can be broadly understood as referring directly to the "one or more downlink reference signals". An alternative expression is "a list of one or more downlink reference signals".

The expressions **"beam"** and **"downlink reference signal"** can be used interchangeably, because the beam is a representation of the spatial receive filter used to receive a particular downlink reference signal. For instance, in the present scenario of an improved beam management reporting procedure, it is assumed that communication between the UE and the gNB is performed via beams (be it UL beam or DL beam). Downlink reference signals can be transmitted via narrow beams (e.g. common narrow beam signals are CSI-RS or DMRS) or transmitted via wider beams (e.g. common wide beam signal is SSB). Another expression in this connection is **"spatial direction",** where a beam (and thus the corresponding downlink reference signal) implies a certain "spatial direction" in which the DL RS is received (from viewpoint of UE) or in which the DL is transmitted (from viewpoint of gNB). Thus, the beam management report might be understood as reporting "downlink reference signals", or as reporting "beams", which respectively imply reporting "spatial directions".

The expression **"beam management report procedure"** or **"beam reporting procedure"** or **"UE-initiated beam reporting procedure"** and similar expressions can be broadly understood as referring to a procedure that is initiated by the UE and may involve that, after initiation, the UE transmits a report to the base station.

The determining of **"uplink radio resources"** broadly covers any parameters that allow the UE to transmit the UE-initiated beam management report to the base station. Correspondingly, the uplink radio resources can be understood to refer to resources in frequency and time. In one example, the UE may determine further parameters for the uplink radio resources, such as a modulation and coding scheme, a transmission power command, frequency hopping instruction, Bandwidth part, periodicity, etc.

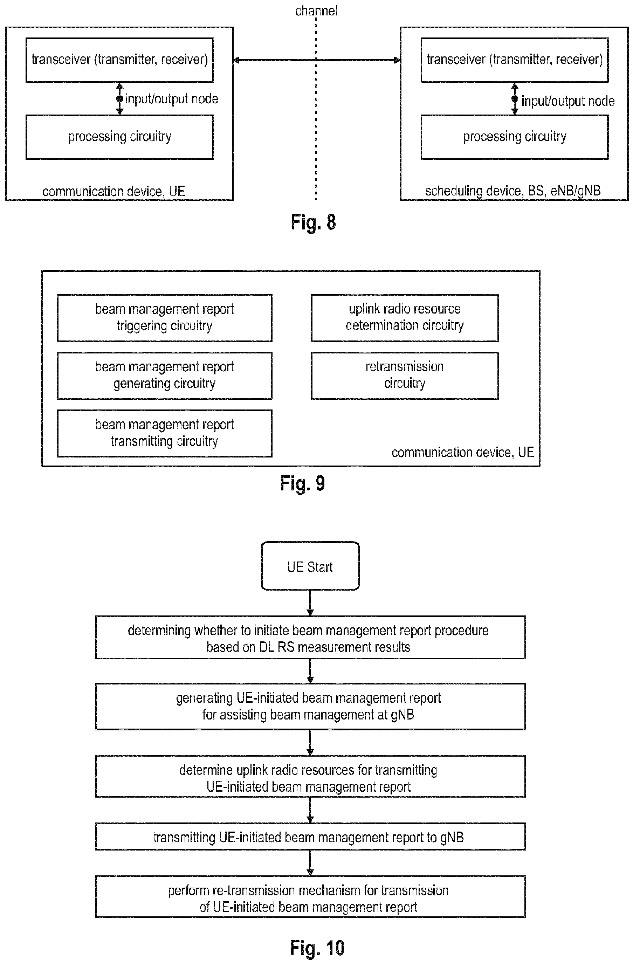

**Fig. 8** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to different solutions (and respective variants) of an improved UE-initiated beam management reporting procedure.

In connection with these solutions, improved UEs, improved base stations and improved integrated circuits are presented, which participate separately or together in the improved UE-initiated beam management reporting procedures. Corresponding methods for the UE behavior and the base station behavior are provided as well. The integrated circuits may correspond to the UE and base station, and respectively their behavior.

**Fig. 9** illustrates a simplified and exemplary UE structure according to a basic implementation of the improved beam management reporting procedure presented in more detail below. In one example, the UE structure can be implemented based on the general UE structure explained in connection with Fig. 8. The various structural elements of the UE illustrated in said Fig. 9 can be interconnected between one another e.g., with corresponding input/output nodes (not shown) e.g., in order to exchange control and user data and other signals. Although not shown for illustration purposes, the UE may include further structural elements.

As apparent from Fig. 9, the UE may include a beam management report triggering circuitry, a beam management report generating circuitry, a beam management report transmitting circuitry, an uplink radio resource determination circuitry and a retransmission circuitry. The processing circuitry of the general UE structure of Fig. 8 can be implemented as the above beam management report triggering circuitry, beam management report generating circuitry, and uplink radio resource determination circuitry of Fig. 9, and can also perform further functions as will be become apparent from below. The transceiver of Fig. 8 can function as the above beam management report transmitting circuitry and retransmission circuitry of Fig. 9, and can also perform further functions as will become apparent from below.

One exemplary procedure is implemented by a UE that includes the following. Processing circuitry of the UE determines whether to initiate a beam management reporting procedure, based on results of measurements performed by the UE on one or more downlink reference signals. The processing circuitry, in case of determining to initiate the beam management reporting procedure, generates a UE-initiated beam management report comprising information for assisting beam management at a base station for the UE. The processing circuitry performs control to determine uplink radio resources for transmitting the generated UE-initiated beam management report. A transmitter of the UE transmits the generated UE-initiated beam management report to the base station using the determined uplink radio resources. The processing circuitry performs a retransmission mechanism for transmitting the generated UE-initiated beam management report.

A corresponding exemplary method comprises the following steps performed by a UE:
determining whether to initiate a beam management reporting procedure, based on results of measurements performed by the UE on one or more downlink reference signals ,
in case of determining to initiate the beam management reporting procedure, generating a UE-initiated beam management report comprising information for assisting beam management at a base station for the UE, and
performing control to determine uplink radio resources for transmitting the generated UE-initiated beam management report,
transmitting the generated UE-initiated beam management report to the base station using the determined uplink radio resources, and
performing a retransmission mechanism for transmitting the generated UE-initiated beam management report.

A corresponding sequence diagram for an exemplary UE behaviour in line with the above-discussed UE and UE method is presented in **Fig. 10****.**

The above-described improved procedure at the UE facilitates achieving the objective and overcoming at least some of the drawbacks explained above. On the one hand, the improved UE-initiated beam reporting procedure facilitates exploiting the UE's better and more timely knowledge of the beam quality changes, so as to facilitate more timely reports while at the same time reducing the reporting overhead and reporting latency. With the timely beam reporting procedure, unnecessary periods of degraded downlink communication from the network may be reduced, resulting in network energy saving as higher energy consuming protocols such as UE-initiated beam recovery procedures and network initiated retransmissions or high power transmissions of data or control signals may be avoided.

The improved beam management reporting procedure is flexible in that it allows different mechanisms to transmit the beam management report, which allows to take into account one or more of the report size, a tolerated delay and the intended reliability of the transmission. Different and exemplary implementations of the improved beam management reporting procedure are explained in the following. For the explanation of the different implementations, some exemplary and simplifying assumptions are made.

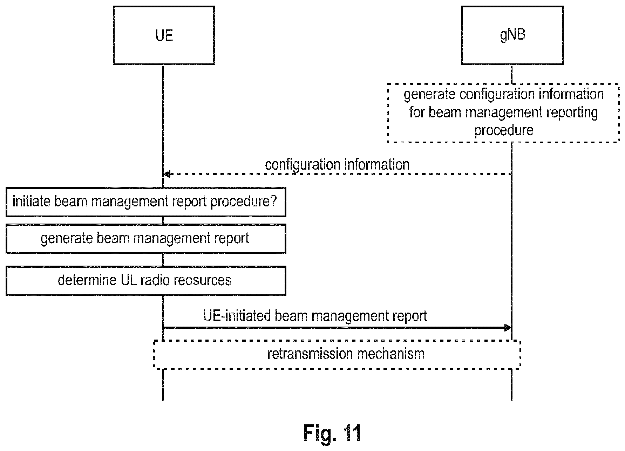

**Fig. 11** is a signaling diagram of an exemplary and simplified implementation of the improved beam management reporting procedure, illustrating the exchange of messages between the different participating entities (here the UE and gNB) and the steps performed at these entities. The UE behaviour and gNB behaviour follow the above described UE and base station and the respective methods.

It is assumed that the UE is located in its current serving cell, controlled by the gNB (as an example of a base station), which is also responsible for the beam management for the UE. The UE and gNB may or may not already communicate with each other, e.g. via PDCCH, PDSCH etc. The UE, on the other hand, assists the gNB for the beam management according to the improved UE-initiated beam management reporting procedure.

For example, the UE may assist beam management at the gNB by providing information on possible different and better beams that can be used by the gNB in the downlink transmission towards the UE and/or better beams that the UE could use in the uplink transmission (e.g. instead of a currently-used beams). Correspondingly, the UE-initiated beam management report is generated by the UE to carry suitable information. Then, the UE may transmit the generated UE-initiated beam management report to the base station in different ways (as will be explained below). Broadly defined, the beam management report thus assists in the UE-related beam management at the gNB.

One optional process is that the gNB generates configuration information for the improved beam management reporting procedure and transmits said generated configuration information to the UE (see dashed box and arrow in Fig. 11). According to different exemplary implementations (for details see below), the configuration information may for example configure one or more of uplink radio resources, random access preambles, one or more sets of downlink reference signals, etc.

The above-described beam management reporting procedure includes performing a retransmission mechanism, which has the benefit of increasing the reliability of the overall transmission by controlling whether an initial transmission was successful and allowing retransmissions of the UE-initiated beam management report in case the base station did not successfully receive the initial transmission. However, performing the retransmission mechanism is only an optionally improvement that can be or is not performed in addition to the initial transmission of the UE-initiated beam management report (in Fig. 11 the retransmission mechanism is illustrated with a dashed box). Put differently, another exemplary implementation of the improved UE-initiated beam management reporting comprises the necessary steps up to the initial transmission of the UE-initiated beam management report (see below detailed implementations) but does not implement a retransmission mechanism. On the other hand, for the following description, it is assumed that a retransmission procedure is performed between the UE and the base station, and particular implementations of such a retransmission procedure will be described as well.

The processes at the UE side have been already explained in detail with respect to Fig. 9 and 10 above. In brief, assuming that the UE indeed determines to initiate a beam management reporting procedure, the UE proceeds to generate a corresponding UE-initiated beam management report. The UE proceeds to determine suitable uplink radio resources, and then uses same to transmit the generated report to the gNB. Depending on the content of the UE-initiated beam management report, the gNB can then proceed appropriately with the beam management, e.g. initiate beam switching procedure, adjusting beam, etc.

More detailed and exemplary implementations of the improved UE-initiated beam management reporting procedure will be explained in the following.

### <Determining whether to initiate a beam management reporting procedure >

As explained above with respect to Fig. 9, 10 and 11, the UE determines whether to initiate (other possible term "trigger") a beam management reporting procedure, based on results of measurements performed by the UE on one or more downlink reference signals. Exemplary implementations thereof will be explained in more detail below.

The decision on whether to initiate the beam management report procedure is taken by the UE, in other words the beam management reporting is initiated by the UE, which thus has more control on whether and when to transmit a beam management report than compared to a network-controlled beam management reporting (e.g. periodic, semi-persistent or a-periodic). This has the further benefit already mentioned above, e.g. facilitating more timely reports while at the same time reducing the reporting overhead and reporting latency.

Whether to trigger the beam management reporting procedure by the UE can be based on measurements that are performed by the UE on downlink reference signals that are transmitted by the base station. These downlink reference signals can be for example one or more cell search signals (such as Synchronization Signal Block reference signals, SSBs), and/or one or more UE-specific reference signals (such as Channel State Information reference signals, CSI-RS), and/or one or more downlink demodulation reference signals, such as DM-RS, relating to a downlink control channel (such as a Physical Downlink Control Channel, PDCCH) transmitted from the gNB to the UE.

These downlink reference signals measured for the purpose of determining whether to initiate a beam management reporting procedure can include downlink reference signals that allow determining the reception quality of currently used beams. For instance, such downlink reference signals may include downlink reference signals that have a same or similar spatial direction as a beam or beams currently used by the gNB in the downlink to transmit control or user data, e.g. the PDCCH or PDSCH.

In one example, these downlink reference signals for the purpose of triggering the beam management reporting procedure are configured as an initial set of one or more downlink reference signals at the UE (called for brevity Set0). This initial downlink reference signal set can be different from other sets of downlink reference signals (e.g. see below Set1) usable at the UE for generating the beam management report (for details see below) and for assisting the beam management at the gNB side.

The downlink reference signals to be measured for the report triggering are determined by the UE for instance as follows. In one option, the UE determines these downlink reference signals based on configuration information that is received from the gNB. This gNB configuration can be performed using configuration messages of a higher-layer protocol, such as the RRC protocol in exemplary 3GPP-compliant implementations. The gNB is aware of the beams currently used for communicating with the UE and thus can determine those downlink reference signals that the UE should measure for the purpose of triggering a beam management report. Correspondingly, the gNB can also keep the downlink reference signals to be measured (Set0) up to date, by transmitting suitable configuration information to the UE, e.g. after having switched to another DUUL beam for the UE (e.g. in response to the UE-initiated beam management reporting).

In any case, the UE can measure downlink reference signals. Whether to indeed initiate the beam management reporting is then based on the results of these measurements on the downlink reference signals. There are several trigger conditions on when the UE determines to initiate the beam management reporting. In general, triggering the beam management reporting may be performed in case the UE becomes aware of information usable for assisting the beam management at the gNB side. This usable information can refer e.g. to the reception quality of currently-used beams (DUUL).

According to one exemplary trigger condition, beam management reporting is to be initiated by the UE in case the measured quality of the downlink reference signals is bad, e.g. below a quality threshold. Other exemplary trigger conditions are that the measured quality of the downlink reference signals has deteriorated, or has deteriorated by more than a preconfigured amount of the quality measure (e.g. by more than X RSRP, e.g. 50%), or has deteriorated with a certain speed.

According to one exemplary implementation, the measurement of the downlink reference signals produces quality measurement results. Examples for the quality measurement results are a reference signal received power, RSRP, measurement value and/or a signal to interference plus noise ratio, SINR, measurement value, and/or any other suitable quality metric.

It is assumed for the following that the UE eventually determines to initiate a beam management reporting procedure and thus proceeds to generate a beam management report to be transmitted to the gNB.

### <Generating a beam management report >

As explained above with respect to Fig. 9, 10 and 11, the UE generates a UE-initiated beam management report that comprises information for assisting beam management at a base station for the UE. Exemplary implementations thereof will be explained in more detail below.

After the UE decides to initiate the beam management reporting, the UE proceeds to generate the content of such a UE-initiated beam management report.

For example, the UE-initiated beam management report comprises one or more of the following:
- a flag indicating that the quality of the downlink signal reception is bad,
- information about detected beams,
- at least part of the measured downlink reference signals,
- the determined downlink signal reception quality, and
- an identification of a preferred beam.

Each of the above content examples of the beam management report assists the gNB with the beam management procedure with respect to the UE. Beam management may generally comprise beam adjustment and beam switching, so as to facilitate maintaining an optimal DL and/or UL beam for the UE.

For instance, by indicating (with a flag) that the downlink signal reception quality is bad, the gNB may trigger e.g. an aperiodic beam measurement report requesting detailed measurement results or requesting the UE to proceed with further measurements to identify a new preferred beam to switch to. By directly indicating an identification of a preferred beam, the UE can not only implicitly indicate that the current downlink signal reception is bad, but already provide suitable information to the gNB about a beam to switch to. This reduces the delay of the beam switching, because there is no need for a further beam management report with further information necessary for the gNB to determine a new beam to switch to.

According to one example, the UE may be configured with a set of downlink reference signals (called for brevity Set1) that are to be measured and the results of which are to be reported within the UE-initiated beam management report. This set defined for generating the UE-initiated beam management report can be different from the above-discussed initial downlink reference signal set (Set0) configured for the purpose of triggering the UE-initiated beam management reporting procedure.

In brief, the UE generates the UE-initiated beam management report comprising information assisting the beam management at the base station for the UE.

### <Determining uplink radio resources and (re)-transmission of beam management report transmission>

As explained above with respect to Fig. 9, 10 and 11, the UE performs control to determine uplink radio resources, and then transmits the generated UE-initiated beam management report to the base station. As an optional implementation, the UE utilizes a retransmission mechanism for increasing the reliability of the report transmission. Exemplary implementations thereof will be explained in more detail below.

In particular, before the UE is able to transmit the previously-generated UE-initiated beam management report, the UE first determines how to transmit it, and particularly which uplink radio resources are to be used. There are several different options on how to transmit the UE-initiated beam management report. For the presented improved beam management reporting procedure, three different transmission mechanisms, and respective variants, will be explained in the following.

As an overview, the UE-initiated beam management report can be transmitted based on a two-stage transmission mechanism, or based on a one-stage transmission mechanism, or based on a random access procedure. Moreover, in addition to the different transmission mechanisms, in exemplary implementations, the UE may also implement a retransmission mechanism that allows to increase the reliability of the transmission in case the gNB does not successfully receive the initial transmission; the particular retransmission mechanism depends on the transmission mechanism and in the following will be explained together with same.

### Two-stage transmission mechanism

According to the two-stage transmission mechanism, the transmission of the UE-initiated beam management report is performed in two stages, wherein the first stage is for requesting and receiving an allocation of uplink radio resources from the base station, which are then used for the actual transmission of the UE-initiated beam management report in the second stage.

In particular, regarding the first stage, after having generated the UE-initiated beam management report, the UE transmits a request for uplink radio resources to the base station. In return, the UE receives a scheduling message assigning the uplink radio resources to the UE for transmitting the generated UE-initiated beam management report.

For transmitting the resource request to the base station, the UE may use uplink radio resources that are configured in advance by the base station, e.g. periodic uplink radio resources of an uplink control channel (e.g. PUCCH). Exemplary, more detailed, implementations of which uplink radio resources the UE may use for transmitting the resource request will be described below.

Two different variants on how to implement the resource request are described in the following.

According to a first variant, the resource request is a general scheduling request, wherein one trigger, among a plurality of triggers for the UE to transmit the general scheduling request, is the intention of the UE to transmit a UE-initiated beam management report. Correspondingly, transmitting the general scheduling request is available to the UE for a plurality of different reasons, and the general scheduling request just generally indicates that UE needs uplink radio resources for an uplink transmission. Thus, the UE reuses said general scheduling request, already available for other purposes, also for requesting uplink radio resources for the transmission of the UE-initiated beam management report.

For example, the general scheduling request can be simply a flag (one bit), without any further information.

As mentioned above, the resource request, here the general scheduling request, can be transmitted using periodic uplink radio resources on an uplink control channel, which are configured in advance by the base station. According to this first variant, the periodic uplink radio resources are configured in advance within a scheduling request configuration received from the base station intended for transmitting a general scheduling request.

According to a further improvement of the first variant, the scheduling request configuration configures separate dedicated periodic uplink radio resources on an uplink control channel for transmitting the general scheduling request when being triggered by a need to transmit a UE-initiated beam management report. Correspondingly, the UE, when being triggered by a UE-initiated beam management reported being available for transmission, will use these separate dedicated periodic uplink radio resources to transmit the general scheduling request. One benefit of this improvement is that the base station can derive from the use of these separate dedicated periodic uplink radio resources that the trigger for the received general scheduling request was the need at the UE of transmitting a UE-initiated beam management report. This knowledge at the base station can be advantageous for several reasons, e.g. in that the base station can specifically assign uplink radio resources of a suitable size and reliability.

According to an exemplary 3GPP-compliant implementation, the general scheduling request is a scheduling request, SR, of the 3GPP standards, the same or similar as explained above (see e.g. section "Uplink Control Information in 5G NR and Scheduling Requests"). Correspondingly, the first variant can be implemented based on the information elements and mechanisms as described above in connection with a SR of the 3GPP standards. For instance, the configuration of the PUCCH resources may be configured based on the *SchedulingRequestResourceConfig* IE, which points to a PUCCH-ResourcelD and defines a periodicity and offset. The PUCCH-ResourcelD points to a PUCCH resource, wherein the PUCCH resource may e.g. define one or more of a PUCCH resource index, the starting PRB and hopping PRB and a PUCCH format. In another implementation, the configuration of the PUCCH resources may be configured based on a new scheduling request resource configuration inside the *MAC-CellGroupConfig* IE, which in turn points to a PUCCH-ResourcelD and defines a periodicity and offset.

According to a second variant, the resource request is a beam-report-specific scheduling request, wherein one trigger for the UE to transmit the beam-report-specific scheduling request is the intention of the UE to transmit a UE-initiated beam management report. Put differently, the beam-report-specific scheduling request is only dedicated for obtaining uplink radio resources for transmitting the UE-initiated beam management report; the UE does not transmit the beam-report-specific scheduling request for another reason. As such, a new type of uplink control information is thereby introduced, besides the general scheduling request (and others such as HARQ ACK or CSI report).

Consequently, when receiving the beam-report-specific scheduling request, the base station knows that the UE needs uplink radio resources for transmitting a UE-initiated beam management report. This knowledge at the base station can be advantageous for several reasons, e.g. in that the base station can specifically assign uplink radio resources of a suitable size and reliability.

For example, the beam-report-specific scheduling request can be simply a flag (one bit). On the other hand, the beam-report-specific scheduling request can include further information, such as
- trigger information, that the resource request was triggered by a UE-initiated beam management report (e.g. one or more bits),
- information on a type of UE-initiated beam management report (e.g. one or more bits; assuming several types of UE-initiated beam management reports can be transmitted by the UE), and
- information on the amount of requested uplink radio resources (e.g. one or more bits).

As mentioned above, the resource request, here the beam-report-specific scheduling request, can be transmitted using periodic uplink radio resources on an uplink control channel, which are configured in advance by the base station. According to this second variant, the periodic uplink radio resources are configured in advance within a beam-report-specific scheduling request configuration received from the base station intended for transmitting a beam-report-specific scheduling request. The beam-report-specific scheduling request configuration can be specifically and flexibly designed so as to include only that information that is needed for transmitting the beam-report-specific scheduling request.

One possible example to distinguish the beam-report-specific scheduling request from another one, e.g. general scheduling request, is based on assigning periodic uplink radio resources for transmitting the beam-report-specific scheduling request that are different from the periodic uplink radio resources available to the UE for transmitting another, e.g. general, scheduling request. Correspondingly, the UE, when transmitting the beam-report-specific scheduling request uses these separate periodic uplink radio resources of the beam-report-specific scheduling request configuration.

In the above, two different variants of the transmission of the resource request in the first stage of the two-stage transmission mechanism were described. Considering the importance of the UE-initiated beam management report, in one exemplary implementation the UE may additionally perform a retransmission mechanism for both variants of the resource request, which has the benefit that reliability of the overall resource request transmission can be increased. One example of a suitable retransmission mechanism comprises retransmitting the resource request in case of not receiving the scheduling message from the base station. Consequently, if the UE determines that the scheduling message is not received within a period of time after having transmitted the resource request, the UE retransmits the resource request for uplink radio resources to the base station.

Furthermore, variations of the above retransmission mechanism can also be used. For instance, the retransmission mechanism may be further limited such that the retransmission of the resource request is performed only up to a maximum number of retransmissions.

In further examples, the retransmission mechanism can be configured by the base station, particularly parameters of the retransmission mechanism. For instance, the time period that the UE waits before determining to retransmit as well as the maximum number of retransmissions can be configured by the base station. One benefit is thus that the base station may control an intended reliability of the overall transmission.

In the following, different variants of the scheduling message will be described in the following.

The scheduling message allocates the uplink radio resources to the UE. These uplink radio resources can refer to an uplink shared channel (such as the PUSCH). Because the uplink radio resources are scheduled on the uplink shared channel by the base station specifically upon request, the radio resource allocation can be more flexible and specifically take into account that the uplink radio resources are requested for transmitting the beam management report. Thus, for instance, the uplink radio resources can be allocated so as to allow a high reliability of the transmission of the UE-initiated beam management report. Further, and compared to using uplink radio resources that are configured in advance for an uplink control channel, the two-stage transmission mechanism facilitates allocating more uplink radio resources to the UE and thus allowing a larger payload on the uplink shared channel for transmitting the UE-initiated beam management report. Correspondingly, the two-stage transmission mechanism has the benefit that it allows the UE to transmit reports of any size, small or large, particularly where the beam management report comprises information on the detected beams and their reception quality parameters (see above section titled "<Generating a beam management report>").

According to an exemplary 3GPP-compliant implementation, the scheduling message can be implemented as a Downlink Control Information, DCI, message, such as a DCI of Format 0_0/1/2, which schedule uplink radio resources on the PUSCH.

Moreover, in the second stage, the UE transmits the UE-initiated beam management report using the uplink radio resources (e.g. of an uplink shared channel, such as the PUSCH) scheduled by the scheduling message. There are different variants on how the UE-initiated beam management report can be transmitted to the base station.

According to the first variant, the generated UE-initiated beam management report is transmitted as a Medium Access Control, MAC, Control Element, MAC-CE. One advantage of the first variant is that the MAC-CE has a predefined bit structure known to the gNB, and therefore it can be recognized by the gNB despite the gNB not knowing what the request for uplink resources (e.g. of an uplink shared channel, such as the PUSCH) is for.

According to the second variant, the generated UE-initiated beam management report is transmitted as an aperiodic channel state information, CSI, report. The received scheduling message from the gNB correspondingly comprises a trigger for triggering the aperiodic CSI report as well as schedules the uplink radio resources to be used by the UE for transmitting the UE-initiated beam management report. In one example, the scheduling message can be implemented as a DCI message (see already above), and the aperiodic CSI-report trigger can be set in a CSI-request field of the DCI message. The second variant can have the advantage that the CSI report is transmitted by layer-1 and thus can be sent faster than the MAC CE (layer 2) of the first variant. Furthermore, for an exemplary 3GPP standard implementation, the second variant allows the UE to truncate the beam management report in case the allocated uplink resources are limited (similar to what is done in 3GPP standards). It also allows the UE to determine the priority of this beam management report compared to other colliding information similar (to what is done in 3GPP standards).

In the above, two different variants of the transmission of the UE-initiated beam management report in the second stage of the two-stage transmission mechanism were described. Considering the importance of the UE-initiated beam management report, in one exemplary implementation, the UE may additionally perform a retransmission mechanism for both variants of the UE-initiated beam management report transmission, which has the benefit that reliability of the overall transmission can be increased. One example of a suitable retransmission mechanism comprises retransmitting the UE-initiated beam management report in case a retransmission request is received from the base station. Particularly, since the base station already allocated the uplink radio resources in response to the resource request, the base station expects to receive in return an uplink transmission from the UE. Correspondingly, the base station transmits a retransmission request to the UE in case the base station does not receive the UE-initiated beam management report, e.g. within a period of time.

In one example, the retransmission request from the base station can be transmitted as a downlink control information, DCI, message. In an exemplary 3GPP-compliant implementation, the DCI could be a DCI Format 0_1, where the "New-data indicator" field is set to the value 0 (to indicate a retransmission, rather than new data) and might e.g. further indicated a particular HARQ process number (4 bits).

Furthermore, variations of the above retransmission mechanism can also be used. For instance, the retransmission mechanism may be further limited such that the retransmission request is transmitted to the UE only up to a maximum number of times.

In further examples, the retransmission mechanism can be configured by the base station, particularly parameters of the retransmission mechanism. For instance, the time period that the base station waits before transmitting the retransmission request as well as the maximum number of times of transmitting the retransmission request can be configured by the base station. One benefit is thus that the base station may control an intended reliability of the overall transmission.

### One-stage transmission mechanism

According to the one-stage transmission mechanism, the transmission of the UE-initiated beam management report is performed directly, without a prior request for uplink radio resources. Accordingly, the necessary uplink radio resources are configured in advance for the UE. According to the present implementation, the UE determines periodic uplink radio resources for an uplink control channel according to a resource configuration received in advance from the base station.

Considering that this one-stage transmission mechanism is enabled to directly transmit the UE-initiated beam management report without the need of first requesting uplink radio resources from the base station, a lower latency for the transmission is thus facilitated.

In particular, the resource configuration can be generated by the base station and indicates the periodic uplink radio resources that are usable by the UE for transmitting the UE-initiated beam management report. The UE-initiated beam management report is transmitted as uplink control information, and the uplink radio resources can be for an uplink control channel (e.g. PUCCH).

According to an exemplary 3GPP-compliant implementation, the configuration of PUCCH resources usable for transmitting the UE-initiated beam management report can be based on the information elements and mechanisms as described above in connection with the 3GPP standards (see above section "Uplink Control Information in 5G NR and Scheduling Requests"). For instance, the uplink radio resources for UE-initiated beam management report may be configured as one or more PUCCH resources, wherein each PUCCH resource may e.g. define one or more of an PUCCH resource index, the starting PRB and hopping PRB and a PUCCH format.

According to a first variant of the one-stage transmission mechanism, the above-mentioned resource configuration is a channel state information, CSI, report configuration that is configured in advance by the base station for the UE-initiated beam management report. This additional CSI report configuration for UE-initiated beam reporting is configured by the base station, e.g. based on the CSI framework also used for configuring a periodic or semi-persistent CSI report. This CSI report configuration for UE-initiated beam reporting configures in advance periodic uplink radio resources for transmitting the UE-initiated beam management report, e.g. by pointing to suitable uplink radio resources (e.g. PUCCH resources)

It is assumed that the UE is also configured by the base station to perform usual CSI reporting, according to a CSI report configuration. For instance, the CSI report configuration may configure the UE to perform periodic CSI reporting and/or semi-persistent CSI reporting. The usual periodic/semi-persistent CSI report configuration may be configured to point to the same PUCCH resources as configured for the CSI report configuration for the UE-initiated beam management reporting. In other words, the CSI report configuration for the UE-initiated beam reporting may share the uplink radio resources (e.g. PUCCH resources) with other CSI report configuration(s), such as a periodic/semi-persistent CSI report. Thus, the UE reuses those same uplink radio resources (e.g. PUCCH resources) for reporting the UE-initiated beam management report and the periodic/semi-persistent CSI report.

In other implementations, the CSI-report configuration for the UE-initiated beam management reporting may configure different (either completely different or partly overlapping) uplink radio resources than those for other CSI report configuration(s), such as a periodic/semi-persistent CSI report.

These uplink radio resources for the UE-initiated beam management reporting are periodic, such that they are periodically available to the UE for carrying the UE-initiated beam management report whenever necessary.

In further example implementations, the above additional CSI configuration for the UE-initiated beam management reporting not only configures the uplink radio resources, but may also configure other aspects of the UE-initiated beam management reporting, such as the quality metric to measure (e.g. RSRP), which content to report, etc.

This has the benefit that further UE configurations for the UE-initiated beam management reporting, more particularly the usable uplink radio resources, are not necessary, which reduces the configuration overhead.

In the above example of reusing the uplink radio resources also configured by the base station for other CSI reporting, a collision may occur according to which the UE would have to transmit a periodic/semi-persistent CSI report and the UE-initiated beam management report using the same uplink radio resources. In such a collision case, the UE-initiated beam management report is prioritized over such a periodic/semi-persistent CSI report, because the UE-initiated beam management report is considered to carry more important information for the beam management.

As a result, the UE would drop the regular CSI report, and instead transmit the UE-initiated beam management report using the uplink radio resources as configured by the CSI report configuration.

According to an exemplary 3GPP-compliant implementation, the CSI report configuration for UE-initiated beam management report can be based on the information elements and mechanisms as described above in connection with the 3GPP standards (see above section "Channel State Information measurement and reporting framework"), in particular *CSI-ReportConfig* IE which is also used to define configuration for periodic/semi-persistent CSI reporting.

According to a second variant of the one-stage transmission mechanism, the above-mentioned resource configuration is a resource configuration that is dedicated to transmitting the UE-initiated beam management report. The resource configuration thus does not relate to a CSI report configuration (or any other such as HARQ Ack, or SR). This dedicated resource configuration (exemplarily termed beam reporting configuration) indicates the uplink radio resources for an uplink control channel (e.g. time & frequency radio resources) and further indicates the periodicity (e.g. in unit of symbols or slots) of the indicated uplink radio resources available to the UE for transmitting the UE-initiated beam management report. Consequently, the dedicated beam reporting configuration defines periodic uplink radio resources that are available to the UE when necessary to transmit the UE-initiated beam management report.

According to this second variant, the resource configuration is dedicated for the beam management reporting, compared to the above first variant of reusing a different CSI report configuration. Consequently, this second variant has one advantage that a collision of the UE-initiated beam management report with another report (e.g. the CSI report) can be avoided e.g. by orthogonal allocation of uplink resources.

Another advantage of the second variant is that the dedicated beam reporting configuration can be specifically and flexibly designed so as to include only that information that is needed for the UE-initiated beam management reporting.

In particular, according to the above first variant, the periodicity of the PUCCH resources and size of the reports carried on the PUCCH resources are configured to also apply for the periodic CSI reporting, such that these two parameters might not be ideal for UE-initiated beam management report and its periodicity and payload. Therefore, by using a separate configuration framework, parameters can be specifically configured for the UE-initiated beam management reporting. For instance, the frequency of the available uplink radio resources can be for example increased. Also the resource allocation can be small (or smaller than for a CSI report), so as not to waste resources. And in case the payload of the report is big, the report can be split among multiple transmission occasions of the periodic uplink radio resources. The advantages of such a scheme is then to design a UCI framework around the characteristics of the UE-initiated beam management reporting. In addition, the periodicity of such uplink radio resources can be dynamically changed depending on the history of the channel quality and beam changes.

As described above, the one-stage transmission mechanism uses periodic uplink radio resources that are configured in advance (e.g. on an uplink control channel) to transmit the UE-initiated beam management report. Depending on the implementation, such previously configured periodic uplink radio resources might only allow a small payload of the UE-initiated beam management report. Correspondingly, the one-stage transmission mechanism might be more suitable to reports of a small size, e.g. where the UE-initiated beam management report comprises a flag and/or an identification of a preferred beam (see above section titled "<Generating a beam management report>").

In the above, two different variants of the one-stage transmission mechanism were described. Considering the importance of the UE-initiated beam management report, in one exemplary implementation, the UE may additional utilize a retransmission mechanism for both variants, which has the benefit that reliability of the overall transmission can be increased. One example of a suitable retransmission mechanism comprises retransmitting the UE-initiated beam management report in case of not receiving an acknowledgment from the base station, indicating that the base station successfully received the transmitted UE-initiated beam management report.

For example, the acknowledgement can be transmitted by the base station e.g. in a DCI message. In the DCI, the gNB can use a dedicated field to acknowledge the successful reception of the UE-initiated report. Alternatively, the successful reception, can be indicated by the gNB by using a DL DCI that is indicating a beam modification/change/switch of the UE's current transmission/reception beam, based on the UE-initiated beam report that was sent to the gNB.

Furthermore, variations of the above retransmission mechanism can also be used. For instance, the retransmission mechanism may be further limited such that the retransmission of the UE-initiated beam management report is performed only up to a maximum number of retransmissions.

### Random-access-procedure-based transmission mechanism

According to the random-access-procedure-based transmission mechanism, the UE-initiated beam management report is transmitted within a random access procedure. Correspondingly, after having generated the UE-initiated beam management report, the UE triggers a random access procedure to transmit same to the base station.

Correspondingly, further to already defined allowed triggers for using the RACH procedure (e.g. initial access, SR failure etc.), the transmission of the UE-initiated beam management report becomes a further trigger event according to which the UE is allowed to use the RACH procedure.

Different random access procedures can be used in said respect, a contention-based random access (CBRA) procedure or a contention-free random access (CFRA) procedure. In the CBRA procedure, multiple users randomly select a preamble from a pool of preambles, and a contention resolution phase determines which user, if any, had its data successfully received by the network. Contention resolution resolves contention between two or more users selecting the same preamble. In the CFRA procedure, a preamble is uniquely pre-allocated to the user, hence there is no possibility of preamble collision between users and no need for contention resolution.

It is preferable that the UE triggers a CFRA procedure for transmitting the UE-initiated beam management report, because the CFRA procedure has an increased reliability (e.g. no collisions) and a lower latency (e.g. no contention resolution necessary), compared to the CBRA procedure.

In order to be able to use the CFRA procedure, it is exemplarily assumed herewith that the UE is configured to use a CFRA procedure. Otherwise, the UE would use the CBRA procedure to transmit the UE-initiated beam management report.

Generally, it is exemplary assumed that the RACH procedure, be it CBRA or CFRA, is performed by using beams, i.e. the transmission by the UE and gNB are performed by using beams. Especially in high-frequency scenarios, such as FR2, the UE performs the RACH using beamformed transmissions. This involves that the UE performs an initial beam detection during the RACH to find a good or best beam (e.g. measuring downlink reference signals), and the UE then performs the transmission along said detected beam. Correspondingly, also the UE-initiated beam management report, being transmitted within the random access procedure (e.g. within MsgA or Msg3, see below), is transmitted along said detected beam. This has one benefit in that the uplink transmission of the UE-initiated beam management report is specifically beamformed to be directed at the base station and thus is more reliable.

With respect to the CBRA procedure, the UE is configured with a set of non-UE-specific random access preambles, where each preamble is associated with a downlink reference signal. According to an exemplary 3GPP-compliant implementation, the reference signals that are associated with the non-UE-specific random access preambles can be cell-search reference signals, such as an SS/PBCH block.

In one example, the UE would measure downlink reference signals and hence select one that has a good or even best measurement result. The UE can thus select the corresponding non-UE-specific preamble associated with the selected reference signal and can perform the CBRA procedure to carry the UE-initiated beam management report to the base station. The UE-initiated beam management report would then be transmitted within the CBRA procedure; details on the 4-step and 2-step CBRA and the message with which the UE-initiated beam management report will be transmitted are provided below.

The transmission of the preamble as well as the rest of the transmission/reception of the PRACH procedure messages (e.g. Msg1/2/3/4 for 4-Step RACH) use the beam of the downlink reference signal corresponding to the selected preamble.

In order to be able to perform the CFRA procedure, the UE is configured in advance by the base station with a set of UE-specific random access preambles (called for brevity Set PRACH) uniquely allocated to the UE, where each UE-specific random access preamble is associated with a downlink reference signal. Alternatively, the "UE-specific" random access preambles can also be called "UE-dedicated" random access preambles. In brief, the UE can thus select one of the UE-specific random access preambles and perform the CFRA procedure to carry the UE-initiated beam management report to the base station.

In more detail, according to one example, the UE-specific random access preambles of the set are associated with corresponding downlink reference signals that can be used for the RACH procedure. According to an exemplary 3GPP-compliant implementation, the downlink reference signals that are associated with the UE-specific random access preambles can be cell-search reference signals (SS/PBCH block) or CSI-RS reference signals. The UE measures these downlink reference signals and selects one downlink reference signal thereof, e.g. a good or best one (e.g. best RSRP), for being used for the RACH. The UE then determines the associated UE-specific random access preamble and transmits same to the base station as part of the CFRA procedure. The determined UE-specific preamble as well as the rest of the PRACH procedure messages (e.g. Msg1/2/3/4 for 4-Step RACH) are transmitted/received using the beam of the downlink reference signal corresponding to the UE-specific preamble.

The UE-initiated beam management report would then also be transmitted within the CFRA procedure; details on the 4-step and 2-step CFRA and the message with which the UE-initiated beam management report will be transmitted are provided below.

As presented above with respect to generating the UE-initiated beam management report, the UE can also be configured with a set of downlink reference signals (Set1) for being reported within the UE-initiated beam management report. The set of downlink reference signals for the RACH (Set PRACH) can be the same as or different from the set of downlink reference signals (Set1) for generating the UE-initiated beam management report. Consequently, it is possible that the UE-initiated beam management report reports one or more different beams than are usable for the RACH procedure.

Moreover, it can be advantageous if the two sets (Set 1 and Set PRACH) are fully overlapping, i.e. contain the same downlink reference signals, or at least when the Set1 is a subset of the Set PRACH. Alternatively, there might be also only one common configured set of downlink reference signals, used by the UE commonly for generating the UE-initiated beam management report and for performing the RACH procedure. This would save configuration overhead. In any case, by configuring fully overlapping downlink reference signals, the UE only needs to measure the downlink reference signals from the common set, which further saves UE processing.

As discussed above, if possible the UE should attempt using the CFRA procedure to carry the UE-initiated beam management report, due to increased reliability and lower latency. On the other hand, it might not be possible for the UE to use the CFRA procedure. For example, it might not be possible for the UE to select a UE-specific random access preamble, e.g. because the UE might not be configured with UE-specific random access preambles (but UE is configured with only non-UE-specific random access preamble) or because no particular downlink reference signal associated with the UE-specific preambles could be determined by the UE (e.g. due to an overall bad reception quality of all downlink reference signals such that a certain lower-quality threshold is not met). In said case, as described above, the UE selects a non-UE-specific random access preamble (e.g. associated with one of the measured downlink reference signals) and transmits said non-UE-specific random access preamble together with the UE-initiated beam management report as part of the CBRA procedure.

In the above, different variants of the random-access-procedure-based transmission mechanism have been described, e.g. based on using a CBRA or CFRA procedure. In either case, the CBRA/CFRA procedure can be implemented as a 4-step or 2-step random access procedure.

In case of a 4-step random access procedure, the UE-initiated beam management report is transmitted with a third message (Msg3) of the 4-step random access procedure using uplink radio resources scheduled within a second message (RAR) of the 4-step random access procedure. Correspondingly, the second message schedules uplink radio resources, e.g. on an uplink shared channel such as the PUSCH, for the UE to use.

In case of a 2-step random access procedure, the UE-initiated beam management report is transmitted with a first message (MsgA) of the 2-step random access procedure using uplink radio resources that are configured in advance. The uplink radio resources for the MsgA can be configured in advance by the base station; e.g. one or more of time/frequency domain resources, modulation & coding scheme, transmission-power-related parameters etc. Furthermore, the preconfigured uplink radio resources may be on an uplink shared channel, such as the PUSCH

There are benefits when transmitting the UE-initiated beam management report using a 2-step random-access procedure instead of using a 4-step random-access procedure, namely that the control signaling overhead is reduced, the latency can be reduced and a transmission on the uplink shared channel is possible already in the first step.

According to an exemplary 3GPP-compliant implementation, the above described CBRA, CFRA procedures, and also respectively the 4-step or 2-step implementations of the CBRA and CFRA procedures, can be implemented in the same or similar manner as the random-access procedures defined in the 3GPP standards (see above section "Random Access procedure"). Correspondingly, the random-access-procedure-based transmission mechanism can be implemented based on the information elements and mechanisms as described above in connection with the random access according to the 3GPP standards. For instance, the PUSCH uplink radio resources for the MsgA transmission can be given in the IE *msgA-PUSCH-Config,* and further may be different for the 2-step CBRA and CFRA procedures.

In the above, a 2-step and a 4-step RACH-based transmission mechanism were described. Considering the importance of the UE-initiated beam management report, in one exemplary implementation, the UE may additionally perform a retransmission mechanism for both variants, which has the benefit that reliability of the overall transmission can be increased.

One example of a retransmission mechanism comprises retransmitting the UE-initiated beam management report in case a retransmission request is received from the base station. Particularly, for the 4-step RACH procedure, since the base station allocated the uplink radio resources with Msg2 (RAR) in response to the resource request (preamble), the base station expects to receive in return an uplink transmission from the UE (Msg3 with UE-initiated beam management report). Correspondingly, the base station transmits a retransmission request to the UE in case the base station does not receive the UE-initiated beam management report, e.g. within a period of time. For the 2-step RACH, the base station may receive the random access preamble but fails to receive the corresponding MsgA, such that the base station then transmits a retransmission request to the UE.

In one example, the retransmission request from the base station can be transmitted as a downlink control information, DCI, message. In an exemplary 3GPP-compliant implementation, the DCI could be a DCI Format 0_1, where the "New-data indicator" field is set to the value 0 (to indicate a retransmission, rather than new data) and might e.g. further indicate a particular HARQ process number (4 bits).

Furthermore, variations of the above retransmission mechanism can also be used. For instance, the retransmission mechanism may be further limited such that the retransmission request is transmitted to the UE only up to a maximum number of times.

One of the benefits of using the random-access-procedure-based transmission mechanism is a large payload can be transmitted, particularly when using the 4-step random access procedure where Msg2 (RAR) specifically allocates uplink radio resources for transmitting the UE-initiated beam management report in Msg3.

### Further improvement - Autonomous beam switching at UE

In the following, a further improvement for the beam management will be explained, according to which the UE autonomously switches to a new beam without the need of receiving a corresponding beam switch command from the base station.

This improved beam-switching procedure can be implemented as a stand-alone solution, i.e. without implementing any particular one of the above-described improved transmission mechanisms for transmitting the UE-initiated beam management report.

Furthermore, this improved beam-switching procedure can be implemented in combination with any of the above-described improved transmission mechanisms for transmitting the UE-initiated beam management report. For instance, the autonomous beam switching can be executed by the UE, after having transmitted the report according to the two-stage transmission mechanism, according to the one-stage transmission mechanism, or according to the random-access-procedure-based transmission mechanism. In either case, after concluding the transmission of the UE-initiated beam management report and successful reception by the gNB, the UE can perform the autonomous beam switch to the best/preferred beam as reported to the base station.

In any case, be it the above-mentioned stand-alone implementation or combined implementation, it is assumed that the UE generates and transmits a UE-initiated beam management report to the base station for assisting in the beam management (e.g. according or not according to the above-mentioned any of the above-described improved transmission mechanisms for transmitting the UE-initiated beam management report). It is further assumed that the content of the UE-initiated beam management report is such that it indicates a best/preferred beam that the UE has measured. This allows that the base station knows the best beam to which the UE will autonomously switch.

The best/preferred beam may relate to one or both of an UL and DL beam. Correspondingly, the UE may switch one or both of the UL and DL beam transmissions; in the uplink the UE would transmit data over the new beam, and in the downlink, the UE expects the base station to transmit the downlink data over the new beam as well.

One exemplary condition on when to actually perform the autonomous beam switch by the UE is that the UE should first determine that the UE-initiated beam management report was actually successfully received (e.g. and decoded) by the base station. This determination depends on how the UE-initiated beam management report was transmitted to the base station (see e.g. above three different transmission mechanism: the two-stage transmission mechanism, the one-stage transmission mechanism, the random-access-procedure-based transmission mechanism). For example, in order to increase the reliability of the transmission and optionally implement a retransmission mechanism, the base station may either transmit an acknowledgement message back to the UE indicating that the base station received the report, or the base station may transmit a retransmission request to the UE in case the base station expected but did not receive the UE-initiated beam management report from the UE.

Correspondingly, the UE may positively determine that the UE-initiated beam management report was properly received by the base station when it either receives the acknowledgement or in the absence of a retransmission request (e.g. within a period of time) from the base station.

After confirming that the base station successfully received the UE-initiated beam management report, the UE can perform the autonomous switch to the best/preferred beam as reported to the base station.

According to an exemplary variant of the present improved beam-switching procedure, whether or not the UE autonomously switches the beam is also dependent on whether the UE has the corresponding capability to perform it. In particular, there may be UEs that have such a capability to autonomously switch the beam without gNB command (termed e.g. autonomous-beam-switch capability), and other UEs that do not have such an autonomous-beam-switch capability. Therefore, a UE, having such an autonomous-beam-switch capability, can transmit to the base station information about this capability. This may be done well before the autonomous-switch occurs, such that the base station is timely aware of the UE behaviour regarding the autonomous beam switch.

According to a further exemplary variant of the present improved beam-switching procedure, the autonomous beam-switching may further be controlled by the base station. In particular, in addition or independently of the UE's capability to autonomously switch the beam (see above variant), the base station can either allow or not allow the UE to autonomously switch the beam upon transmitting the UE-initiated beam management report. The gNB can configure the UE appropriately in advance and has more control on the behaviour of UEs in its cell.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a UE is provided that includes the following. Processing circuitry of the UE determines whether to initiate a beam management reporting procedure, based on results of measurements performed by the UE on one or more downlink reference signals. The processing circuitry, in case of determining to initiate the beam management reporting procedure, generates a UE-initiated beam management report comprising information for assisting beam management at a base station for the UE. The processing circuitry performs control to determine uplink radio resources for transmitting the generated UE-initiated beam management report. A transmitter of the UE transmits the generated UE-initiated beam management report to the base station using the determined uplink radio resources. The processing circuitry performs a retransmission mechanism for transmitting the generated UE-initiated beam management report.

According to a second aspect provided in addition to the first aspect, the performing control to determine the uplink radio resources for transmitting the generated UE-initiated beam management report comprises:
- the transmitter, in operation, transmits a request for uplink radio resources to the base station, and
- a receiver, in operation, receives a scheduling message assigning the uplink radio resources to the UE for transmitting the generated UE-initiated beam management report.

In an optional implementation, the processing circuitry performs a further retransmission mechanism for the transmitting of the request. The further retransmission mechanism comprises determining whether or not the scheduling message is received within a period of time after having transmitted the request, and further comprises, in case the scheduling message is not received within the period of time, retransmitting the request for the uplink radio resources to the base station, optionally wherein retransmitting the request is performed only up to a maximum number of retransmissions.

According to a third aspect provided in addition to the second aspect, wherein the request is a general scheduling request, wherein one trigger, among a plurality of triggers for the UE to transmit the general scheduling request, is the intention of the UE to transmit a UE-initiated beam management report.

In an optional implementation, the general scheduling request is transmitted using periodic uplink radio resources for an uplink control channel. The periodic uplink radio resources are configured in advance within a scheduling request configuration received from the base station intended for transmitting a general scheduling request. In a further optional implementation, the scheduling request configuration configures separate periodic uplink radio resources for transmitting the general scheduling request when being triggered by a need to transmit a UE-initiated beam management report.

According to a fourth aspect, provided in addition to the second aspect, the request is a beam-report-specific scheduling request, wherein one trigger for the UE to transmit the beam-report-specific scheduling request is the intention of the UE to transmit a UE-initiated beam management report.

In an optional implementation, the beam-report-specific scheduling request is transmitted using periodic uplink radio resources for an uplink control channel. The periodic uplink radio resources are configured in advance within a beam-report-specific scheduling request configuration received from the base station intended for transmitting a beam-report-specific scheduling request.

According to a fifth aspect, provided in addition to any of the second to fourth aspects, the generated UE-initiated beam management report is transmitted as
- a Medium Access Control, MAC, Control Element, MAC-CE, or
- an aperiodic channel state information, CSI, report, optionally wherein the received scheduling message comprises a trigger for triggering the aperiodic CSI report.

In an optional implementation, the retransmission mechanism for transmitting the UE-initiated beam management report as a MAC CE or an aperiodic CSI report comprises re-transmitting the UE-initiated beam management report in case of receiving a retransmission request from the base station.

According to a sixth aspect, provided in addition to the first aspect, the performing control to determine the uplink radio resources for transmitting the generated UE-initiated beam management report comprises:
- determining periodic uplink radio resources for an uplink control channel according to a resource configuration received in advance from the base station.

In an optional implementation, the retransmission mechanism for transmitting the generated UE-initiated beam management report using the uplink radio resources of the resource configuration comprises re-transmitting the UE-initiated beam management report in case of not receiving an acknowledgment from the base station, indicating that the base station successfully received the transmitted UE-initiated beam management report.

According to a seventh aspect, provided in addition to the sixth aspect, the resource configuration is a channel state information, CSI, report configuration, which configures in advance the periodic uplink radio resources for transmitting the UE-initiated beam management report.

In an optional implementation, the CSI report configuration for transmitting the UE-initiated beam management report shares uplink radio resources with a CSI report configuration for transmitting a periodic CSI report or for transmitting a semi-persistent CSI report.

In a further optional implementation, in case of a collision between a CSI report as configured by the CSI report configuration and the generated UE-initiated beam management report to be transmitted using said same uplink radio resources of the CSI report configuration, the generated UE-initiated beam management report is prioritized and transmitted.

According to an eighth aspect, provided in addition to the six aspect, the resource configuration is a beam-reporting configuration for transmitting a UE-initiated beam management report.

In an optional implementation, the beam-reporting configuration indicates uplink radio resources of an uplink control channel and further indicates a periodicity for the indicated uplink radio resources of the uplink control channel.

According to a ninth aspect, provided in addition to the first aspect, the performing control to determine the uplink radio resources for transmitting the generated UE-initiated beam management report comprises:
- performing a random access procedure and transmitting the UE-initiated beam management report within the random access procedure, wherein the random access procedure is a contention-free random access procedure or a contention-based random access procedure.

In case the determining determines a UE-specific random access preamble from a set of UE-specific random access preambles, the contention-free random access procedure is performed. In case the determining determines a non-UE-specific random access preamble from a set of non-UE-specific random access preambles, the contention-based random access procedure is performed.

In an optional implementation, each UE-specific random access preamble is associated with a downlink reference signal, and the processing circuitry, in operation, determines a preferred downlink reference signal of these associated downlink reference signals, and the processing circuitry, in operation, determines the UE-specific random access preamble associated with the determined preferred downlink reference signal. In an optional implementation, the UE is configured with one common set of downlink reference signals, usable for both determining the preferred downlink reference signal and determining the UE-specific random access preamble and usable for generating the UE-initiated beam management report.

According to a tenth aspect, provided in addition to any the ninth aspect, either of the contention-based and contention-free random access procedure is
- a 4-step random access procedure, and the generated UE-initiated beam management report is transmitted with a third message of the 4-step random access procedure using uplink radio resources on an uplink shared channel scheduled within a second message of the 4-step random access procedure, or
- a 2-step random access procedure, and the generated UE-initiated beam management report is transmitted with a first message of the 2-step random access procedure using uplink radio resources that are configured in advance and are usable for transmitting the first message of the 2-step random access procedure on an uplink shared channel.

In an optional implementation, the retransmission mechanism for transmitting the generated UE-initiated beam management report using the 2-step random access procedure or the 4-step random access procedure comprises re-transmitting the UE-initiated beam management report in case of receiving a retransmission request from the base station.

According to an eleventh aspect, provided in addition to any one of the first to tenth aspects, the processing circuitry autonomously switches to a new beam for one or both of uplink and downlink transmissions with the base station, wherein the new beam is a preferred beam reported by the beam management report. In an optional implementation, the transmitter transmits, to the base station, information on a UE's capability to autonomously switch to a new beam, before the process of autonomously switching to the new beam.

According to a twelfth aspect, provided in addition to the eleventh aspect, the autonomously switching is performed after determining that the transmitted UE-initiated beam management report was received by the base station. In an optional implementation, the determining that the transmitted beam management report was received by the base station is based on one of:
- receiving an acknowledgement message from the base station for the transmitted beam management report, and
- determining the absence of a retransmission request from the base station for retransmitting the transmitted beam management report.

According to a thirteenth aspect, a method is provided comprising the following steps performed by a user equipment, UE:
determining whether to initiate a beam management reporting procedure, based on results of measurements performed by the UE on one or more downlink reference signals ,
in case of determining to initiate the beam management reporting procedure, generating a UE-initiated beam management report comprising information for assisting beam management at a base station for the UE, and
performing control to determine uplink radio resources for transmitting the generated UE-initiated beam management report,
transmitting the generated UE-initiated beam management report to the base station using the determined uplink radio resources, and
performing a retransmission mechanism for transmitting the generated UE-initiated beam management report.

According to a fourteenth aspect, an integrated circuit is provided which, in operation, controls a process of a user equipment, UE, the process comprising the following steps performed by the UE:
determining whether to initiate a beam management reporting procedure, based on results of measurements performed by the UE on one or more downlink reference signals ,
in case of determining to initiate the beam management reporting procedure, generating a UE-initiated beam management report comprising information for assisting beam management at a base station for the UE, and
performing control to determine uplink radio resources for transmitting the generated UE-initiated beam management report,
transmitting the generated UE-initiated beam management report to the base station using the determined uplink radio resources, and
performing a retransmission mechanism for transmitting the generated UE-initiated beam management report.

## Claims

1. A user equipment, UE, comprising:
processing circuitry, which in operation, determines whether to initiate a beam management reporting procedure, based on results of measurements performed by the UE on one or
more downlink reference signals,
the processing circuitry, in case of determining to initiate the beam management reporting procedure, generates a UE-initiated beam management report comprising information for assisting beam management at a base station for the UE, and
the processing circuitry, which in operation, performs control to determine uplink radio resources for transmitting the generated UE-initiated beam management report,
a transmitter, which in operation, transmits the generated UE-initiated beam management report to the base station using the determined uplink radio resources, and
wherein the processing circuitry, in operation, performs a retransmission mechanism for transmitting the generated UE-initiated beam management report.

2. The UE according to claim 1, wherein the performing control to determine the uplink radio resources for transmitting the generated UE-initiated beam management report comprises:
the transmitter, in operation, transmits a request for uplink radio resources to the base station, and
a receiver, in operation, receives a scheduling message assigning the uplink radio resources to the UE for transmitting the generated UE-initiated beam management report,
optionally wherein the processing circuitry, in operation, performs a further retransmission mechanism for the transmitting of the request, wherein the further retransmission mechanism comprises determining whether or not the scheduling message is received within a period of time after having transmitted the request, and further comprises, in case the scheduling message is not received within the period of time, retransmitting the request for the uplink radio resources to the base station, optionally wherein retransmitting the request is performed only up to a maximum number of retransmissions.

3. The UE according to claim 2, wherein the request is
∘ a general scheduling request, wherein one trigger, among a plurality of triggers for the UE to transmit the general scheduling request, is the intention of the UE to transmit a UE-initiated beam management report,
optionally wherein the general scheduling request is transmitted using periodic uplink radio resources for an uplink control channel, wherein the periodic uplink radio resources are configured in advance within a scheduling request configuration received from the base station intended for transmitting a general scheduling request,
optionally wherein the scheduling request configuration configures separate periodic uplink radio resources for transmitting the general scheduling request when being triggered by a need to transmit a UE-initiated beam management report.

4. The UE according to claim 2, wherein the request is
∘ a beam-report-specific scheduling request, wherein one trigger for the UE to transmit the beam-report-specific scheduling request is the intention of the UE to transmit a UE-initiated beam management report,
optionally wherein the beam-report-specific scheduling request is transmitted using periodic uplink radio resources for an uplink control channel, wherein the periodic uplink radio resources are configured in advance within a beam-report-specific scheduling request configuration received from the base station intended for transmitting a beam-report-specific scheduling request.

5. The UE according to any one of claims 2 to 4, wherein the generated UE-initiated beam management report is transmitted as
∘ a Medium Access Control, MAC, Control Element, MAC-CE, or
∘ an aperiodic channel state information, CSI, report, optionally wherein the received scheduling message comprises a trigger for triggering the aperiodic CSI report,
optionally wherein the retransmission mechanism for transmitting the UE-initiated beam management report as a MAC CE or an aperiodic CSI report comprises re-transmitting the UE-initiated beam management report in case of receiving a retransmission request from the base station.

6. The UE according to claim 1, wherein the performing control to determine the uplink radio resources for transmitting the generated UE-initiated beam management report comprises:
- determining periodic uplink radio resources for an uplink control channel according to a resource configuration received in advance from the base station,
optionally wherein the retransmission mechanism for transmitting the generated UE-initiated beam management report using the uplink radio resources of the resource configuration comprises re-transmitting the UE-initiated beam management report in case of not receiving an acknowledgment from the base station, indicating that the base station successfully received the transmitted UE-initiated beam management report.

7. The UE according to claim 6, wherein the resource configuration is a channel state information, CSI, report configuration, which configures in advance the periodic uplink radio resources for transmitting the UE-initiated beam management report,
optionally wherein the CSI report configuration for transmitting the UE-initiated beam management report shares uplink radio resources with a CSI report configuration for transmitting a periodic CSI report or for transmitting a semi-persistent CSI report,
optionally in case of a collision between a CSI report as configured by the CSI report configuration and the generated UE-initiated beam management report to be transmitted using said same uplink radio resources of the CSI report configuration, the generated UE-initiated beam management report is prioritized and transmitted.

8. The UE according to claim 6, wherein the resource configuration is a beam-reporting configuration for transmitting a UE-initiated beam management report,
optionally wherein the beam-reporting configuration indicates uplink radio resources of an uplink control channel and further indicates a periodicity for the indicated uplink radio resources of the uplink control channel.

9. The UE according to claim 1, wherein the performing control to determine the uplink radio resources for transmitting the generated UE-initiated beam management report comprises:
- performing a random access procedure and transmitting the UE-initiated beam management report within the random access procedure, wherein the random access procedure is a contention-free random access procedure or a contention-based random access procedure,
in case the determining determines a UE-specific random access preamble from a set of UE-specific random access preambles, the contention-free random access procedure is performed, and
in case the determining determines a non-UE-specific random access preamble from a set of non-UE-specific random access preambles, the contention-based random access procedure is performed,
optionally wherein each UE-specific random access preamble is associated with a downlink reference signal, and the processing circuitry, in operation, determines a preferred downlink reference signal of these associated downlink reference signals, and the processing circuitry, in operation, determines the UE-specific random access preamble associated with the determined preferred downlink reference signal,
optionally wherein the UE is configured with one common set of downlink reference signals, usable for both determining the preferred downlink reference signal and determining the UE-specific random access preamble and usable for generating the UE-initiated beam management report.

10. The UE according to claim 9, wherein either of the contention-based and contention-free random access procedure is
∘ a 4-step random access procedure, and the generated UE-initiated beam management report is transmitted with a third message of the 4-step random access procedure using uplink radio resources on an uplink shared channel scheduled within a second message of the 4-step random access procedure, or
∘ a 2-step random access procedure, and the generated UE-initiated beam management report is transmitted with a first message of the 2-step random access procedure using uplink radio resources that are configured in advance and are usable for transmitting the first message of the 2-step random access procedure on an uplink shared channel,
optionally wherein the retransmission mechanism for transmitting the generated UE-initiated beam management report using the 2-step random access procedure or the 4-step random access procedure comprises re-transmitting the UE-initiated beam management report in case of receiving a retransmission request from the base station.

11. The UE according to any one of claims 1 to 10, wherein the processing circuitry, in operation, autonomously switches to a new beam for one or both of uplink and downlink transmissions with the base station, wherein the new beam is a preferred beam reported by the beam management report, and
optionally wherein the transmitter, in operation, transmits, to the base station, information on a UE's capability to autonomously switch to a new beam, before the process of autonomously switching to the new beam.

12. The UE according to claim 11, wherein the autonomously switching is performed after determining that the transmitted UE-initiated beam management report was received by the base station,
optionally wherein the determining that the transmitted beam management report was received by the base station is based on one of:
- receiving an acknowledgement message from the base station for the transmitted beam management report, and
- determining the absence of a retransmission request from the base station for retransmitting the transmitted beam management report.

13. A method comprising the following steps performed by a user equipment, UE:
determining whether to initiate a beam management reporting procedure, based on results of measurements performed by the UE on one or more downlink reference signals ,
in case of determining to initiate the beam management reporting procedure, generating a UE-initiated beam management report comprising information for assisting beam management at a base station for the UE, and
performing control to determine uplink radio resources for transmitting the generated UE-initiated beam management report,
transmitting the generated UE-initiated beam management report to the base station using the determined uplink radio resources, and
performing a retransmission mechanism for transmitting the generated UE-initiated beam management report.

14. An integrated circuit, which, in operation, controls a process of a user equipment, UE, the process comprising the following steps performed by the UE:
determining whether to initiate a beam management reporting procedure, based on results of measurements performed by the UE on one or more downlink reference signals ,
in case of determining to initiate the beam management reporting procedure, generating a UE-initiated beam management report comprising information for assisting beam management at a base station for the UE, and
performing control to determine uplink radio resources for transmitting the generated UE-initiated beam management report,
transmitting the generated UE-initiated beam management report to the base station using the determined uplink radio resources, and
performing a retransmission mechanism for transmitting the generated UE-initiated beam management report.
